Europäisches Patentamt

European Patent Office

Office européen des brevets

(19)

(11) Publication number: **0 413 118 A2**

# EUROPEAN PATENT APPLICATION

(21) Application number: **90112641.7**

(22) Date of filing: **03.07.90**

(51) Int. Cl.⁵: **B32B 3/04, B32B 27/06, B65D 65/40**

(30) Priority: **14.08.89 FI 893819**

(43) Date of publication of application:
**20.02.91 Bulletin 91/08**

(84) Designated Contracting States:
**AT BE CH DE DK ES FR GB GR IT LI LU NL SE**

(71) Applicant: **MÄKILAAKSO OY**
**Tanhuanpää 5**
**SF-02270 Espoo(FI)**

(72) Inventor: **Mäkilaakso, Antero**
**Tanhuanpää 5**
**SF-02270 Espoo(FI)**

(74) Representative: **Weitzel, Wolfgang, Dr.-Ing.**
**Friedenstrasse 10**
**D-7920 Heidenheim(DE)**

(54) Method for producing a packaging foil and a packaging foil produced according to the method.

(57) A method for producing a packaging foil to be used in the packages of food products and similar consumables, in which packaging foil the base material is a foil strip of a material with one or several barrier layers (2, 5). The invention is implemented by forming the packaging foil from two superimposed foil strips (1...3; 4...6), in which at least one edge (12) of one of the foils (4...6) is folded over about the corresponding edge (11) of the other foil (1...3) and the strips are heat-sealed or processed in a comparable manner for at least the parts projecting above the plane (1) of the superimposed foils in order to produce an essentially sheet-like packaging foil.

Fig. 2

# METHOD FOR PRODUCING A PACKAGING FOIL AND A PACKAGING FOIL PRODUCED ACCORDING TO THE METHOD

The present invention concerns a method for producing a packaging foil used in the packages of food products and similar consumables, in which packaging foil the base material is a foil strip of a material with one or several barrier layers.

Preservation of foods and similar perishable goods conventionally uses closed or lined containers fabricated in some way from foils provided with barrier layers. A most general group of foil packages is formed by, e.g., tubular containers in which the foil itself also forms the stiffening structure. The purpose of the barrier layer, e.g., an aluminium layer, is to act as a protective layer which prevents substances present in the environment from penetrating the container, and vice versa.

Because most metals corrode, they must be prevented from contacting the material to be preserved, and moreover, the metal surface must be protected. The protective layer is generally applied using a plastic or protective lacquer film, applied on, for instance, an aluminium foil during manufacture of the container. Due to reasons related to colour adherence, printability and other similar factors, some kind of protective coating is applied on both sides of the foil. Known in the art are several different manufacturing methods and materials for the foil including, for instance, those disclosed in FI patent applications 820247 and 821686 and US patent 3,817,427.

Most foil manufacturing methods are based on applying a low-cost and soft plastic material, which most generally is polyethylene, in a sufficiently thick layer over the metal sheet. The protective layer must have sufficient thickness to be compatible, i.a., with the used sealing techniques in order to assure the presence of a sufficient quantity of the sealant in heat-sealing. A reason for the lack of technical advancement in field has been the low cost of basic plastics. General opinion in the art has assumed a thick and easily meltable plastic layer to be necessary in heat-sealing in order to achieve sufficient seam strength and stiffness of the foil.

In many packages such as collapsible tubular containers, the nonrecovering character of a collapsed container such as a tube is important. This characteristic is achieved only by means of a foil provided with a single metallic barrier layer having an unnecessary thickness, which can counteract its tendency to recover its original form under the elastic forces of the plastic layers.

Known in the prior art are foils based on a sandwich structure having several barrier or strength-imposing layers. Such foils are disclosed in, for instance, German patent application publications OS-DE 30 24 725 and OS-DE 31 13 428. These inventions are, however, related to self-supporting foils with a particularly high stiffness, whose manufacturing method is cumbersome and based on a multilayer structure fabricated layer by layer. Such foils are unsuitable for the fabrication and mass production processes of packages in which the foil must be bent and sealed using, for instance, heat-sealing. The inventions aim at no material savings, but instead, at improvements in the strength of materials used.

Conventional structures are also plagued by problems arising from the edge remaining within the container to be fabricated, since in most cases the edge of the barrier layer should not make contact with the perishable material to be preserved. Attempts to solve this problem have been made by the use of excess plastic material in the heat-sealed seams and by "concealment" of the edge under a folded seam. The first approach is unreliable and necessitates the use of yet thicker plastic foils, while the second approach is more applicable requiring, however, special preparations prior to sealing.

FI patent 68028 solves the above-described problems by using a packaging foil formed from a plastic base material by adhesion, folding the foil over and seaming it into a barrier-layer-containing blank, whose one side is coated with a plastic layer intended for the protection of the inside and outside surfaces and the other side is coated with a plastic layer intended for sealing and separation/isolation of the barrier layers.

Such foil structures have several drawbacks. For instance, the inside and outside of the final package must necessarily be of the same material and have identical layer thicknesses. For the same reason, the two barrier layers of the foil structure must be of the same material because they are fabricated from the same blank. Furthermore, the method is applicable only to the fabrication of a single packaging foil blank at a time.

The aim of the present invention is to achieve a method suitable for fabricating a packaging foil with superior characteristics, thus avoiding the drawbacks of the prior art described above. The method in accordance with the invention is characterized by forming the packaging foil from two superimposed foil strips, in which at least one edge of one of the foils is folded over about the corresponding edge of the other foil and the strips are heat-sealed or processed in a comparable manner for at least the parts projecting above the plane of the superimposed foils in order to produce an essentially sheet-like packaging foil.

An advantageous embodiment of the invention is characterized by using different widths of the foils so that one of foils is wider than the other, whereby both edges of the wider foil are folded over about the corresponding edges of the narrower foil, at least said edges are heat-sealed and the obtained packaging foil is cut into two essentially equal halves along a line parallel with said edges.

The packaging foil, which is intended for packaging of food products and similar perishable goods and is produced using the method in accordance with the invention, said packaging foil being fabricated from a foil strip enclosing one or several barrier foils, is characterized by having the packaging foil being comprised of two superimposed foil strips, in which at least one edge of one of the foils is folded over about the corresponding edge of the other foil and the strips are heat-sealed for at least the parts projecting above the plane of the superimposed foils in order to produce a sheet-like packaging foil.

A preferred embodiment of the packaging foil in accordance with the invention is characterized by using that side of the ready-to-use packaging foil which is provided by that foil strip, whose edge is folded over, as the inside of the final package.

Another preferred embodiment of the packaging foil in accordance with the invention is characterized by making the barrier layers of the superimposed foil strips of different materials.

A further preferred embodiment of the packaging foil is characterized by having the foil strips to be of different materials.

The invention provides several advantages over conventional techniques. By virtue of the invention it is possible to use barrier layers of different materials in a single packaging foil. Furthermore, the other elements of foil strips, generally consisting of plastic materials, can be varied as needed. For instance, the outside material of the final package can be specified, as conventional, a high-grade plastic, allowing the attractive appearance of the package to be achieved by printing of desired patterns and symbols. Nevertheless, the inside of the same package can at the same time be made of a lower-cost material, which still provides resistance to different forms of attack by the product such as chemical attack. Another extremely significant advantage is that only one of the foils (namely, the foil forming the final outside) must be printed with the desired patterns symbols. In prior art technology, the entire blank had to be printed at equidistant spacings, which necessitated the use of an unnecessarily wide printing machine.

In the following, the invention will be examined in more detail by means of the preferred exemplifying embodiments with reference to the attached drawings, in which

Fig. 1 shows in an end view two superimposed foil strips used for fabricating the packaging foil in accordance with the invention.

Fig. 2 shows the same arrangement as Fig. 1 in a situation in which the foil strips are facing each other and the edges of the lower foil strip are folded over the upper strip.

Fig. 3 shows the same arrangement as Fig. 2 in a stage having both ends of the packaging foil structure heat-sealed and the packaging foil structure slitted into two packaging foil blanks at the center line of the foil.

Fig. 4 shows a section of a folded and end-sealed packaging foil.

Fig. 5 shows a cross-section of a package fabricated from the packaging foil in accordance with the invention.

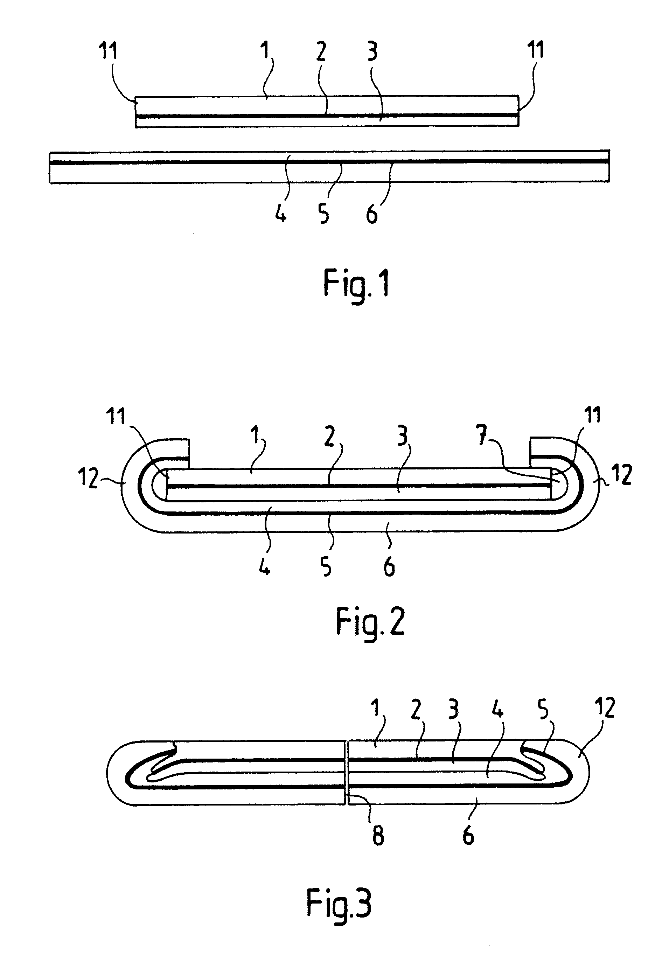

Illustrated in Fig. 1 are two packaging foils, each of which can have a conventional structure. In practice this means that barrier layers 2, 5 are advantageously fabricated from an aluminium foil. The foil elements 1, 3, 4 and 6 enclosing the barrier layers can be of a suitable plastic. There is no need for the upper and lower foil strips to have identical compositions, but instead, the materials can be selected in a desired manner as long as the selection allows the material designated with number 1 to form the outside of the final package and the material designated with number 6 to form the inside of the final package which comes in contact with the product to be packaged in the container.

The embodiment illustrated in Fig. 1 has the lower foil strip arranged to be wider than the upper foil strip and aligned to extend symmetrically over the edges 11 of the upper foil strip. An essential characteristic of the invention dictates that at least one of overlapping edges is arranged as shown in Fig. 1, while the symmetrical arrangement shown in Fig. makes it possible to produce two packaging foils in a single run, thus making the illustrated arrangement a preferred embodiment in terms of producibility. When viewing the illustrated cross-section, the foils must be understood to extend in a plane perpendicular to the plane of the drawing as continuous strips or strips with a definite length. For the purpose of greater clarity, the proportions of the strips shown in Figs. 1...3 are appreciably exaggerated. In reality, the thicknesses of foil strips with the dimensions shown in the figures will be a fraction of that illustrated.

Illustrated in Fig. 2 is a later stage of the foil fabrication method in accordance with the invention, in which stage edges 12 of the lower and wider foil strip are folded about edges 11 of the upper foil strip. Voids 7 still remain at this stage between the edges 12 of the lower foil strip and the edges 11 of the upper foil strip.

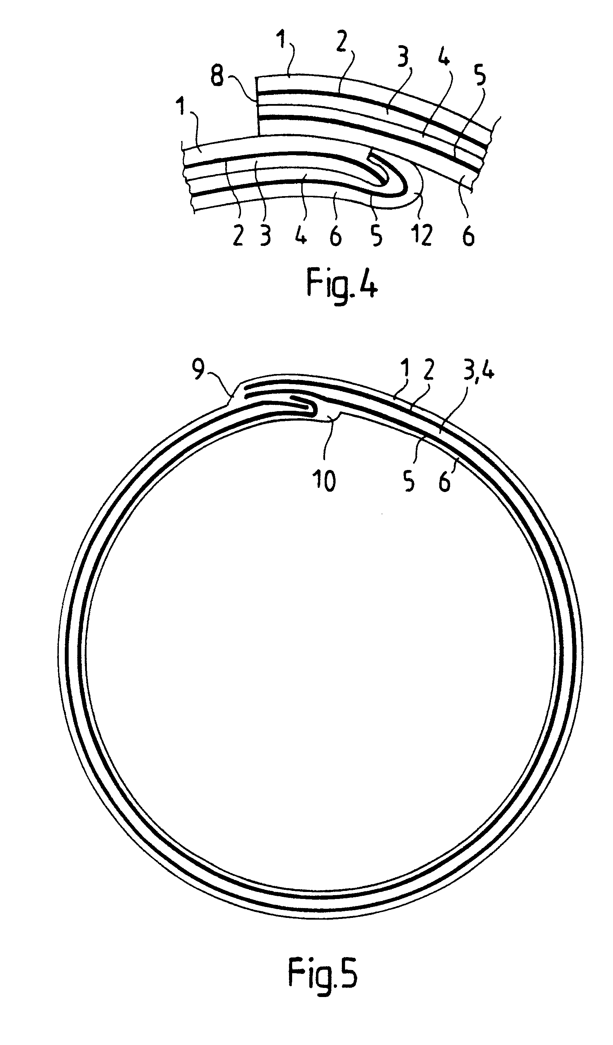

The stage illustrated in Fig. 3 has the edges 12 heat-sealed and flattened to the level of the plane 1 by means of conventional methods for at least those areas of the edges that project above the plane 1. The melted plastic material thereby also fills the voids 7, thus yielding a contiguous structure of packaging foil. Simultaneously, the ends of the barrier layer 2 are slightly bent downward as shown in Fig. 3. The packaging foil structure thus formed can be machined into two essentially identical packaging foil blanks by slitting the foil at its center as shown in Fig. 3. Each of the packaging foil blanks thus produced has one edge heat-sealed in accordance with the invention, with said edge providing a complete protection of the barrier layers 2, 5. This edge in the final package will be kept to the inside of the package (cf. Fig. 4), thus avoiding the possibility of contact of aluminium or similar material of the barrier layer with the packaged product.

Fig. 4 shows a section of a package fabricated from a packaging foil in accordance with the invention after the packaging foil is folded into a tubular shape and the overlapping edges are placed facing each other. As described above, the edge having both barrier layers completely protected will remain inside the final package, while the opposite edge 8 (yet having the barrier layers exposed) is kept to the outside of the package.

The last stage shown in Fig. 5 has the overlapping edges seamed together using a conventional method, for instance, heat-sealing, whereby an airtight and contiguous seam is formed (also at points 9 and 10).

To those versed in the art it is evident that the scope of the invention is not exhausted by the exemplifying embodiments described above; instead, the invention can be varied within the disclosed claims. For instance, the number of barrier layers is not limited to one or two, allowing a desired number of barrier layers to be used. The invention can be applied extremely advantageously to the fabrication of, e.g., tooth paste squeeze tubes or similar containers.

## Claims

1. A method for producing a packaging foil to be used in the packages of food products and similar consumables, in which packaging foil the base material is a foil strip of a material with one or several barrier layers (2, 5), **characterized** in that the packaging foil is formed from two superimposed foil strips (1...3; 4...6), in which at least one edge (12) of one of the foils (4...6) is folded over about the corresponding edge (11) of the other foil (1...3) and the strips are heat-sealed or processed in a comparable manner for at least the parts projecting above the plane (1) of the superimposed foils in order to produce an essentially sheet-like packaging foil.

2. A method as claimed in claim 1, **characterized** in that one of foils (4...6) is wider than the other (1...3), whereby both edges (12) of the wider foil (4...6) are folded over about the corresponding edges (11) of the narrower foil, said edges are heat-sealed and the obtained packaging foil is cut into two essentially equal halves along a line parallel with said edges.

3. A packaging foil intended for the packaging of food products and similar perishable goods, said packaging foil being fabricated from a foil strip enclosing one or several barrier foils (2, 5), **characterized** in that the packaging foil is comprised of two superimposed foil strips (1...3; 4...6), in which at least one edge (12) of one of the foils (4...6) is folded over about the corresponding edge (11) of the other foil (1...3) and the strips are heat-sealed and flattened for at least the edges in order to produce a sheet-like packaging foil.

4. A packaging foil as claimed in claim 3, **characterized** in that the side of the ready-to-use packaging foil which is provided by that foil strip (4...6), whose edge (11) is folded over, forms the inside of the final package.

5. A packaging foil as claimed in claim 3 or 4, **characterized** in that the barrier layers (2; 5) of the superimposed foil strips (1...3; 4...6) are of different materials.

6. A packaging foil as claimed in any of the foregoing claims 3...5, **characterized** in that the foil strips (1...3; 4...6) are of different materials.

Fig.1

Fig.2

Fig.3

Fig.4

Fig.5